(19)

Europäisches
Patentamt
European
Patent Office
Office européen
des brevets

(11) **EP 3 539 708 A1**

(12) **EUROPEAN PATENT APPLICATION**
published in accordance with Art. 153(4) EPC

(43) Date of publication:
**18.09.2019 Bulletin 2019/38**

(21) Application number: **17870342.7**

(22) Date of filing: **06.10.2017**

(51) Int Cl.:
**B23K 9/095** (2006.01)     **B23K 9/10** (2006.01)
**B23K 9/29** (2006.01)

(86) International application number:
**PCT/JP2017/036487**

(87) International publication number:
**WO 2018/088086 (17.05.2018 Gazette 2018/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **14.11.2016 JP 2016221307**

(71) Applicant: **Daihen Corporation**
**Osaka-shi, Osaka 532-8512 (JP)**

(72) Inventors:
• **ONISHI Takanori**
**Osaka-shi**
**Osaka 532-8512 (JP)**
• **IMAMACHI Hiroki**
**Osaka-shi**
**Osaka**
**5328512 (JP)**

(74) Representative: **Boult Wade Tennant LLP**
**Salisbury Square House**
**8, Salisbury Square**
**London EC4Y 8AP (GB)**

(54) **WELDING TORCH AND WELDING SYSTEM**

(57)     One aspect of the present disclosure provides a welding torch that performs arc welding when electric power is supplied from a welding power supply device. The welding torch includes a sensor unit that detects inclination information regarding the welding torch, a welding information acquiring unit that acquires welding information suitable for the inclination information detected by the sensor unit, and a communication unit that sends the welding information acquired by the welding information acquiring unit to the welding power supply device.

## FIG.1A

**Description**

TECHNICAL FIELD

The present disclosure relates to a welding torch and a welding system.

BACKGROUND ART

A consumable-electrode welding system is normally divided into a welding power supply device that is not moved since it is heavy, and a wire feeding device and a welding torch that are carried by a welding technician accompanying a change in a welding location. If the welding power supply device is installed at a location away from the position at which welding work is being performed, it is not productive for the worker to go to the installation position of the welding power supply device to set welding information such as the welding current. In order to resolve this problem, a welding torch has been developed that is provided with an operation button and in which welding information can be set by operating the operation button.

Arc welding is normally performed with the leading end of a welding torch pointed downward, but is sometimes performed with the leading end pointed upward, depending on the welding location. In such a case, a welding mark can be finished with an improved appearance by reducing the welding current as compared with that when the leading end is pointed downward. When welding is continuously performed while changing the direction of the leading end of the welding torch from downward to the horizontal direction or upward along the welding location, it may be necessary to change the welding current during welding. In the case of a conventional welding torch, a welding current setting value can be changed by operating an operation button at hand during welding.

SUMMARY OF INVENTION

However, when the operation button is operated during welding, a weld defect may occur due to shaking of a hand.

The present disclosure was made under the foregoing circumstances, and it is an object of the present disclosure to provide a welding torch that can suppress the occurrence of a weld defect and a welding system including the welding torch.

A welding torch provided by a first aspect of the present disclosure is a welding torch that performs arc welding when electric power is supplied from a welding power supply device, and includes a sensor unit that detects inclination information regarding the welding torch, a welding information acquiring unit that acquires welding information suitable for the inclination information detected by the sensor unit, and a communication unit that sends the welding information acquired by the welding information acquiring unit to the welding power supply device.

The "inclination information" is information that indicates a degree of inclination of the welding torch, and is, for example, an angle that indicates how much the direction of a predetermined axis in the welding torch is inclined relative to a reference direction, such as a vertical direction. The "welding information" is a parameter value for controlling welding electric power that is output from the welding power supply device. For example, in a case where the welding power supply device outputs a direct current, a welding current setting value, a welding voltage setting value, a current rising speed at the time of a short circuit, or the like corresponds to the welding information. In a case where the welding power supply device outputs a pulsed current, a base current setting value, a peak current setting value, a low-level period, or a high-level period of pulses, a pulse frequency, a duty cycle of pulses, an inclination of a rise or a fall of pulses, or the like corresponds to the welding information. In a case where the welding power supply device outputs an alternating current, an alternating current frequency, a ratio of a period during which the welding torch is made positive, or the like corresponds to the welding information.

According to the configuration of the present embodiment, occurrence of a weld defect can be prevented.

In a preferred embodiment of the present disclosure, the sensor unit detects an angle formed by a direction of a leading end of the welding torch and a vertically downward direction as the inclination information. According to this configuration, the direction of the leading end of the welding torch relative to the vertically downward direction can be detected as the inclination information. Thus, an objective direction of the leading end of the welding torch can be detected.

In a preferred embodiment of the present disclosure, the welding information acquiring unit determines to which range of a plurality of ranges the inclination information belongs, and acquires the welding information based on a value associated with the determined range. According to this configuration, welding information corresponding to the inclination information can be easily acquired.

In a preferred embodiment of the present disclosure, the above-described ranges are three ranges. According to this configuration, it is possible to determine in which of three directions the welding torch is inclined (for example, whether the leading end of the welding torch is pointed downward, horizontal, or upward).

In a preferred embodiment of the present disclosure, a region that has hysteresis characteristics is provided as a boundary region between ranges of the plurality of ranges. According to this configuration, it is possible to keep the welding information from being frequently switched as a result of the inclination information frequently changing up and down over the boundary between the ranges.

In a preferred embodiment of the present disclosure, the welding information acquiring unit acquires the welding information based on a value that linearly changes according to the inclination information. According to this configuration, it is possible to suppress a large change in the welding information accompanying a change in the inclination information.

In a preferred embodiment of the present disclosure, the welding information is a welding current setting value. According to this configuration, it is possible to send a welding current setting value suitable for the inclination information to the welding power supply device. As a result, the welding power supply device can make its output suitable for the state of the welding torch by setting the received welding current setting value.

In a preferred embodiment of the present disclosure, the welding power supply device outputs a pulsed current, and the welding information includes any of a base current setting value, a peak current setting value, a low-level period, and a high-level period of pulses, a pulse frequency, a duty cycle of pulses, and an inclination of a rise or a fall of pulses. According to this configuration, it is possible to send any of these welding information items that are suitable for the inclination information to the welding power supply device. As a result, the welding power supply device can make its output suitable for the state of the welding torch by setting the received welding information item.

In a preferred embodiment of the present disclosure, the welding power supply device outputs an alternating current, and the welding information includes an alternating current frequency or a ratio of a period during which the welding torch is made positive. According to this configuration, it is possible to send any of these welding information items that are suitable for the inclination information to the welding power supply device. As a result, the welding power supply device can make its output suitable for the state of the welding torch by setting the received welding information item.

In a preferred embodiment of the present disclosure, the welding torch further includes a display unit that performs display regarding the inclination information. According to this configuration, the worker can objectively recognize how much the welding torch is inclined by viewing the display of the display unit.

In a preferred embodiment of the present disclosure, the welding torch further includes a change amount calculating unit that calculates a change amount of the inclination information and a notification unit that issues a warning when a change amount calculated by the change amount calculating unit exceeds a predetermined value. According to this configuration, a warning can be issued when the inclination information has drastically changed. As a result, the worker can notice a drastic change in the inclination information.

In a preferred embodiment of the present disclosure, the sensor unit includes an acceleration sensor. According to this configuration, the inclination information can be detected based on detected acceleration.

A welding system provided by a second aspect of the present disclosure includes the welding torch provided by the first aspect of the present disclosure and the welding power supply device.

Other features and advantages of the present disclosure will become more apparent from the detailed description given below with reference to the accompanying drawings.

BRIEF DESCRIPTION OF DRAWINGS

FIG. 1A is a schematic diagram illustrating the entire configuration of a welding system according to a first embodiment.

FIG. 1B is a block diagram illustrating a functional configuration of the welding system according to the first embodiment.

FIG. 2A is a front view of an appearance of an example of a welding torch according to the first embodiment.

FIG. 2B is a plan view of the appearance of the example of the welding torch according to the first embodiment.

FIG. 3 is a diagram illustrating a relationship between postures of the welding torch and torch inclination angles.

FIG. 4 is a flowchart for explaining processing for setting welding information.

FIGS. 5A to 5C illustrate output current waveforms in cases where respective welding information items are changed according to a torch inclination angle $\theta$.

FIGS. 6A to 6C illustrate output current waveforms in cases where respective welding information items are changed according to the torch inclination angle $\theta$.

FIG. 7A is a diagram illustrating an example of a table in which values of respective welding information items corresponding to torch inclination angles $\theta$ are set.

FIG. 7B illustrates output current waveforms in a case where respective welding information items are changed according to the torch inclination angle $\theta$ and the table illustrated in FIG. 7A.

FIGS. 8A and 8B illustrate output current waveforms in cases where respective welding information items are changed according to the torch inclination angle θ.

FIG. 9 is a block diagram illustrating a functional configuration of a welding system according to a second embodiment.

FIG. 10 is a block diagram illustrating a functional configuration of a welding system according to a third embodiment.

MODE FOR CARRYING OUT INVENTION

The following specifically describes embodiments of the present disclosure with reference to the drawings, regarding an exemplary case where the present disclosure is applied to a welding torch (a welding system).

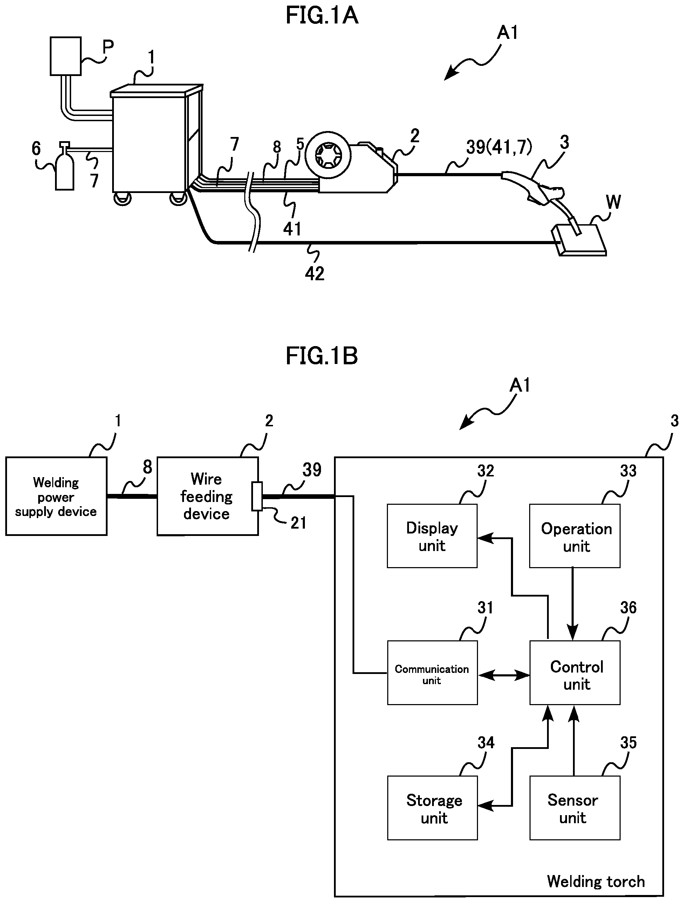

FIGS. 1A and 1B are diagrams for explaining a welding system A1 according to a first embodiment. FIG. 1A is a schematic diagram illustrating the entire configuration of the welding system A1. FIG. 1B is a block diagram illustrating a functional configuration of the welding system A1.

As illustrated in FIGS. 1A and 1B, the welding system A1 includes a welding power supply device 1, a wire feeding device 2, a welding torch 3, power cables 41 and 42, an electric power transmission line 5, a signal line 8, a gas cylinder 6, and a gas pipe 7. One output terminal of the welding power supply device 1 is connected to the welding torch 3 via the power cable 41. The wire feeding device 2 feeds a wire electrode to the welding torch 3, and the leading end of the wire electrode protrudes from the leading end of the welding torch 3. The power cable 41 and the wire electrode are electrically connected at a contact tip disposed at the leading end of the welding torch 3. The other output terminal of the welding power supply device 1 is connected to a workpiece W via the power cable 42. The welding power supply device 1 generates an arc between the workpiece W and the leading end of the wire electrode protruding from the leading end of the welding torch 3, and supplies electric power to the arc. The welding system A1 performs welding on the workpiece W using the heat of the arc.

The welding system A1 uses a shielding gas during welding. The shielding gas is supplied from the gas cylinder 6 to the leading end of the welding torch 3 through the gas pipe 7 that is provided passing through the welding power supply device 1 and the wire feeding device 2. Electric power (for example, DC 24 V) for driving a feed motor or the like is supplied from the welding power supply device 1 to the wire feeding device 2 via the electric power transmission line 5. Also, the welding power supply device 1 and the wire feeding device 2 communicate with each other via the signal line 8. Note that the welding system A1 may have a configuration in which cooling water circulates through the welding torch 3.

The welding power supply device 1 supplies electric power for arc welding to the welding torch 3. The welding power supply device 1 converts three-phase alternating current electric power input from an electric power system P into electric power suitable for arc welding and outputs it. Also, the welding power supply device 1 converts the three-phase alternating current electric power input from the electric power system P into direct current electric power for driving the feed motor or the like of the wire feeding device 2 and outputs the direct current electric power to the wire feeding device 2 via the electric power transmission line 5.

The welding power supply device 1 is controlled to output electric power according to welding information that is changed according to an operation of a non-illustrated operation unit. Also, the welding power supply device 1 changes welding information according to a signal input from the welding torch 3 via the signal line 8.

The wire feeding device 2 feeds the wire electrode to the welding torch 3. The wire electrode passes through the interior of a liner provided inside a torch cable 39 and the welding torch 3, and is guided to the leading end of the welding torch 3. The wire feeding device 2 drives the feed motor or the like with the electric power supplied from the welding power supply device 1 via the electric power transmission line 5. This electric power is also supplied from the wire feeding device 2 to the welding torch 3 via an electric power transmission line (not illustrated) provided inside the torch cable 39. The wire feeding device 2 communicates with the welding power supply device 1 via the signal line 8. Also, the wire feeding device 2 communicates with the welding torch 3 via a signal line (not illustrated) provided inside the torch cable 39. The welding torch 3 and the welding power supply device 1 communicate with each other through the wire feeding device 2.

The wire feeding device 2 and the welding torch 3 are connected to each other by the torch cable 39. The torch cable 39 is connected to a base end of the welding torch 3, and the power cable 41, the gas pipe 7, the liner, the electric power transmission line, and the signal line are disposed inside this cable.

A connector 21 is a connection terminal for connecting the welding torch 3 and the wire feeding device 2 to each other. For example, the connector 21 is a recessed connection terminal, and the welding torch 3 and the wire feeding device 2 are connected to each other by inserting a protruding torch plug (not illustrated) provided at one end of the torch cable 39 of the welding torch 3 into the connector 21. The power cable 41, the gas pipe 7, the liner, the electric power transmission line 5, and the signal line 8 inside the wire feeding device 2 are respectively connected to the power cable 41, the gas pipe 7, the liner, the electric power transmission line, and the signal line inside the torch cable 39 via this connector 21.

The welding torch 3 performs welding on the workpiece W using welding electric power supplied from the welding power supply device 1. The welding torch 3 includes, as functional blocks, a communication unit 31, a display unit 32, an operation unit 33, a storage unit 34, a sensor unit 35, and a control unit 36.

The communication unit 31 is a unit for communicating with the wire feeding device 2. The communication unit 31 sends a signal input from the control unit 36 to the wire feeding device 2 via the signal line inside the torch cable 39. Also, the communication unit 31 receives a signal input from the wire feeding device 2 via the signal line inside the torch cable 39, and outputs the received signal to the control unit 36. As a communications standard, for example, the CAN (Controller Area Network) standard is used.

The display unit 32 performs various kinds of display and includes a display 321 (described later), which is a liquid crystal display device, for example. The display unit 32 is controlled by the control unit 36 and displays welding information stored in the storage unit 34.

The operation unit 33 includes a plurality of operation means and is configured to output an operation signal, corresponding to an operation made on each operation means by a worker, to the control unit 36. As described later, a torch switch 331 and operation buttons 332 serve as operation means. Note that the operation unit 33 may include other operation means.

The storage unit 34 stores settings values of welding information and information regarding total welding time, for example.

The sensor unit 35 includes a plurality of sensors and outputs detection values of each sensor to the control unit 36. In the present embodiment, the sensor unit 35 includes an acceleration sensor 351 that is described later. Note that the sensor unit 35 may include other sensors.

The control unit 36 controls the welding torch 3 and is realized by, for example, a microcomputer or the like. The control unit 36 performs predetermined processing according to an operation signal input from the operation unit 33. Also, the control unit 36 controls communications performed by the communication unit 31, writing and reading of information in the storage unit 34, and display performed by the display unit 32. Also, the control unit 36 performs a predetermined calculation based on detection values input by the sensor unit 35, and uses the calculation result for processing. Specifically, the control unit 36 calculates inclination information regarding the welding torch 3 based on detection values detected by the acceleration sensor 351, and sets welding information corresponding to the inclination information. Details of processing for setting the welding information corresponding to the inclination information will be described later.

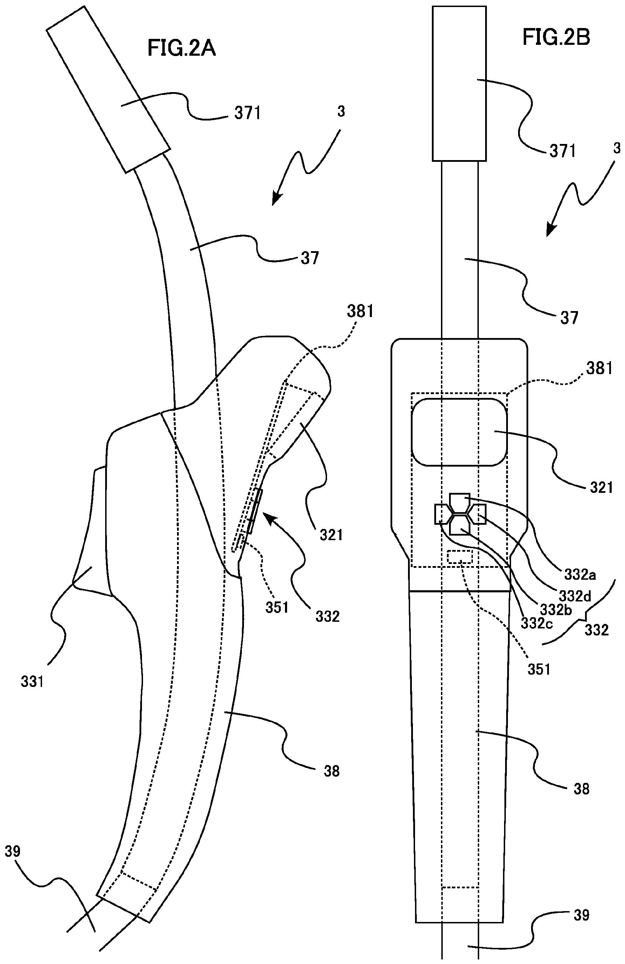

FIGS. 2A and 2B are diagrams illustrating an appearance of an example of the welding torch 3. FIG. 2A is a front view and FIG. 2B is a plan view. As illustrated in FIGS. 2A and 2B, the welding torch 3 includes a torch body 37, a handle 38, a control board 381, the torch switch 331, the operation buttons 332, the display 321, the acceleration sensor 351, and the torch cable 39.

The torch body 37 is a tubular member made of metal, and the liner through which a welding cable passes, the power cable 41, and the gas pipe 7 are disposed inside the torch body 37. A nozzle 371 is attached to the leading end of the torch body 37. The torch body 37 has a curved portion so that the worker can easily point the nozzle 371 at the workpiece W.

The handle 38 is a part to be gripped by the worker and is provided to hold a base end portion of the torch body 37. The worker grips this handle 38 and performs welding work. The torch switch 331, the operation buttons 332, and the display 321 are disposed on the handle 38. Also, the control board 381 is disposed inside the handle 38. Circuits that constitute the communication unit 31, the display unit 32, the operation unit 33, the storage unit 34, the sensor unit 35, and the control unit 36 are mounted on the control board 381.

The torch switch 331 is an operation means for accepting a welding start/stop operation, and is disposed at a location where the worker gripping the handle 38 can easily perform a pressing operation with their index finger. In response to an on operation (pressing) made on the torch switch 331, an operation signal is output to the control unit 36, and when the operation signal is input to the welding power supply device 1, the welding power supply device 1 outputs welding electric power. When the on operation is released, the welding power supply device 1 stops the output of welding electric power. That is, welding is performed only while the torch switch 331 is being pressed.

The display 321 performs various kinds of display and is disposed on the side of the handle 38 that is opposite to the torch switch 331 side, such that the worker who is gripping the handle 38 and performing welding work can easily view a screen.

The operation buttons 332 are operation means for switching the screen or changing various settings values, and are disposed between a grip portion of the handle 38 and the display 321 on the same side of the handle 38 as the display 321. The operation buttons 332 include an up button 332a, a down button 332b, a left button 332c, and a right button 332d. When each of the buttons 332a to 332d is pressed, a corresponding operation signal is output to the control unit 36, and the control unit 36 performs corresponding processing. The left button 332c and the right button 332d are operation means for switching a screen to be displayed in the display 321. The up button 332a and the down button 332b are operation means for changing settings values displayed in the display 321.

A sensor that detects pressing of each operation button 332 is mounted on the control board 381. Also, the display 321 is disposed on the same control board 381. In the present embodiment, the display screen of the display 321 has a predetermined angle with respect to the control board 381 so that the worker can easily operate each operation button 332 while viewing the display screen of the display 321. Note that the display 321 may be disposed such that the display screen is parallel to the control board 381. A microcomputer serving as the control unit 36, a memory serving as the storage unit 34, a communication module serving as the communication unit 31, and various electronic components are also mounted on the control board 381. The acceleration sensor 351 is also mounted on the control board 381.

The acceleration sensor 351 is a three-axis acceleration sensor, and detects acceleration in each axis direction and outputs detection values to the control unit 36. The control unit 36 calculates inclination information regarding the welding torch 3 based on the detection values input by the acceleration sensor 351 of the sensor unit 35. The acceleration sensor 351 detects acceleration in each axis direction of three mutually orthogonal axes set therein. Based on the detected acceleration, the control unit 36 calculates acceleration in each axis direction of three mutually orthogonal axes set in the welding torch 3. In the present embodiment, an axis that extends in the direction of the leading end of the welding torch 3 (i.e., the center axis of the nozzle 371) is used as one axis (hereinafter referred to as a "z axis"). The control unit 36 calculates an angle (hereinafter referred to as a "torch inclination angle") formed by the direction of the z axis toward the leading end of the welding torch 3 and the vertically downward direction (the direction in which gravitational acceleration acts) from the calculated acceleration in each axis direction of the welding torch 3. Note that the method for calculating the torch inclination angle by the control unit 36 is not limited. In the present embodiment, the acceleration sensor 351 and part of the control unit 36 correspond to an example of a "sensor unit", and the "torch inclination angle" corresponds to an example of "inclination information". Note that the sensor unit 35 may include a gyro sensor instead of the acceleration sensor 351. In this case, the control unit 36 calculates the torch inclination angle from angular velocity around each axis detected by the gyro sensor.

Note that the appearance of the welding torch 3 is not limited to that described above. For example, the location and shape of the torch switch 331, the operation buttons 332, and the display 321 are not limited. Also, in the present embodiment, a case is disclosed where the operation buttons 332 are four independent buttons, but a single cross-shaped button may be used. Also, the number of the buttons is not limited.

Next, processing for setting welding information corresponding to inclination information will be described.

Arc welding is normally performed with the nozzle 371 of the welding torch 3 pointed downward, but is sometimes performed with the nozzle 371 pointed upward, depending on the welding location. In such a case, in order to finish a welding mark with a good appearance, it is necessary to reduce an output current as compared with that when the nozzle 371 is pointed downward, to make the output current suitable for the direction of the nozzle 371. In the present embodiment, the output current is automatically changed to be suitable for the direction of the nozzle 371.

The control unit 36 calculates a torch inclination angle based on detection values input by the acceleration sensor 351. The torch inclination angle is an angle formed by the direction of the leading end of the welding torch 3 (the direction of the nozzle 371) and the vertically downward direction, and indicates an angle of inclination of the leading end of the welding torch 3 relative to the vertically downward direction.

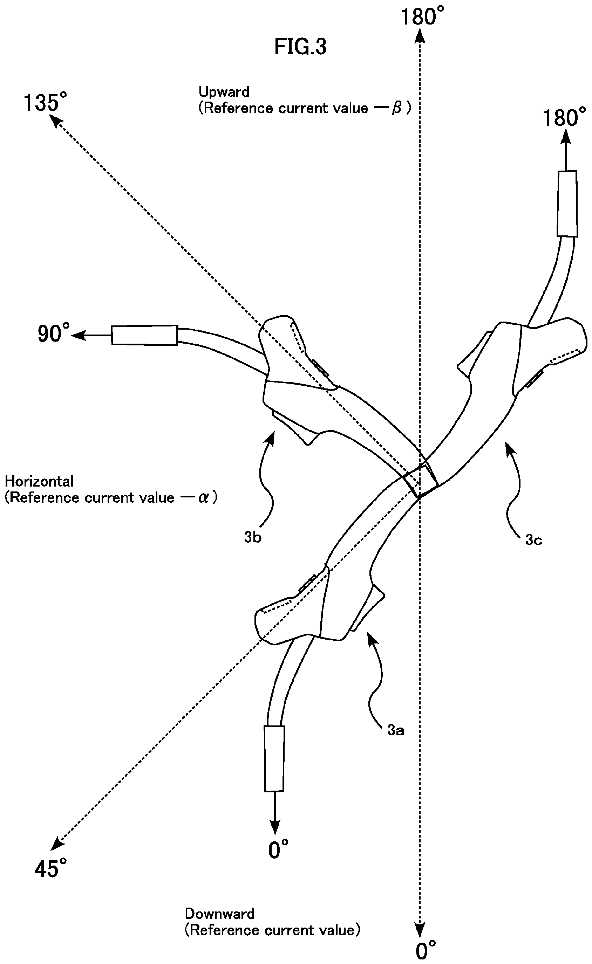

FIG. 3 is a diagram illustrating a relationship between postures of the welding torch 3 and torch inclination angles. In FIG. 3, the vertically downward direction is set as a reference direction of "0°" and the vertically upward direction is set as a direction of "180°" as indicated with dashed line arrows. A welding torch 3a shows a state where the leading end is pointed in the vertically downward direction. In this case, the direction of the leading end of the welding torch 3a is the same as the vertically downward direction, and accordingly the torch inclination angle is "0°". A welding torch 3b shows a state where the leading end is pointed in the horizontal direction. In this case, the direction of the leading end of the welding torch 3b is orthogonal to the vertical direction, and accordingly the torch inclination angle is "90°". A welding torch 3c shows a state where the leading end is pointed in the vertically upward direction. In this case, the direction of the leading end of the welding torch 3c is exactly opposite to the vertically downward direction, and accordingly the torch inclination angle is "180°" .

In the present embodiment, a welding current setting value is changed depending on to which of the following ranges "$0° \leq \theta < 45°$", "$45° \leq \theta < 135°$", and "$135° \leq \theta \leq 180°$" the torch inclination angle $\theta$ belongs. The control unit 36 reads out a welding current setting value stored in the storage unit 34 and uses this value as a reference current value. If the torch inclination angle $\theta$ is in the range of $0° \leq \theta < 45°$, the control unit 36 determines that the leading end of the torch is pointed downward, and sets the reference current value as the welding current setting value. If the torch inclination angle $\theta$ is in the range of $45° \leq \theta < 135°$, the control unit 36 determines that the leading end of the torch is pointed horizontally, and sets a value obtained by subtracting a predetermined value $\alpha$ from the reference current value as the welding current setting value. If the torch inclination angle $\theta$ is in the range of $135° \leq \theta \leq 180°$, the control unit 36 determines that the leading end of the torch is pointed upward, and sets a value obtained by subtracting a predetermined value $\beta$ from the reference current value as the welding current setting value. The predetermined values $\alpha$ and $\beta$ are set in advance according to the reference current value. For example, in the present embodiment, when the reference current value is 150 A, the predetermined value $\alpha$ is set to 10 A and the predetermined value $\beta$ is set to 20 A. Accordingly, if the torch inclination angle $\theta$ is in the range of $0° \leq \theta < 45°$, the welding current setting value is 150 A, which is the reference current value, if the torch inclination angle $\theta$ is in the range of $45° \leq \theta < 135°$, the welding current setting value is 140 A, which is obtained by subtracting the predetermined value $\alpha$ from the reference current value, and if the torch inclination angle $\theta$ is in the range of $135° \leq \theta \leq 180°$, the welding current setting value is 130 A, which is obtained by subtracting the predetermined value $\beta$ from the reference current value. Note that the above-described values are examples of the predetermined values $\alpha$ and $\beta$, and should not be taken as limitations. Alternatively, the reference current value may be multiplied by a predetermined value that indicates a ratio, rather than subtracting a predetermined value from the reference current value. In the present embodiment, the control unit 36 corresponds to an example of a "welding information acquiring unit".

The control unit 36 outputs the welding current setting value to the communication unit 31 and causes the communication unit 31 to send the welding current setting value to the welding power supply device 1. The welding power supply device 1 receives and sets the welding current setting value sent from the communication unit 31. The welding power supply device 1 performs control so that the output current is the set welding current setting value. Thus, the output current from the welding power supply device 1 is controlled to be suitable for the direction of the nozzle 371. Note that the control unit 36 may cause the communication unit 31 to send a signal for reducing the welding current setting value set in the welding power supply device 1 by the predetermined value $\alpha$ (or $\beta$), rather than causing the communication unit 31 to send the welding current setting value itself to the welding power supply device 1.

Also, in the present embodiment, information regarding the torch inclination angle $\theta$ is displayed on the display 321. Specifically, the control unit 36 outputs the calculated torch inclination angle $\theta$ to the display unit 32. The display unit 32 causes the display 321 to display information that is based on the input torch inclination angle $\theta$. Note that the torch inclination angle $\theta$ itself may be displayed, or an illustration of the torch may be displayed and the inclination of the displayed torch may be changed according to the torch inclination angle $\theta$. The worker can be aware of the torch inclination angle $\theta$ by viewing the display 321 and objectively recognize how much the welding torch 3 is inclined. Note that the worker can switch the screen of the display 321 to display the currently set welding current setting value and manually change the welding current setting value. For example, if the worker wants to increase (or reduce) the current a little more judging from the welding state during welding, the worker can switch the screen displayed in the display 321 to a "welding current setting" screen by pressing the left button 332c or the right button 332d and increase (or reduce) the welding current setting value by pressing the up button 332a (or the down button 332b) .

If the worker is not skilled, the worker may be unable to keep the posture of the torch stable and a weld defect may occur. In the present embodiment, a warning is displayed in the display 321 when the torch inclination angle $\theta$ suddenly changes. Specifically, the control unit 36 calculates a change amount $\Delta\theta$ of the torch inclination angle $\theta$ in a predetermined period, and when the absolute value of the change amount $\Delta\theta$ has exceeded a predetermined value (when the torch inclination angle $\theta$ has suddenly changed), outputs an instruction for displaying a warning to the display unit 32. In the present embodiment, a warning is issued when the torch inclination angle $\theta$ changes 5° or more in one second, but this should not be taken as a limitation. In the present embodiment, the control unit 36 corresponds to an example of a "change amount calculating unit". Upon receiving the instruction input from the control unit 36, the display unit 32 causes the display 321 to display a predetermined warning message (for example, "Please beware of weld defect.") . In this case, the display unit 32 corresponds to an example of a "notification unit" . Note that the notification of the warning is not limited to display by the display 321. For example, the warning may be issued using audio or a buzzer sound. The worker can comprehend from the warning that a weld defect may have occurred, and notice a weld defect.

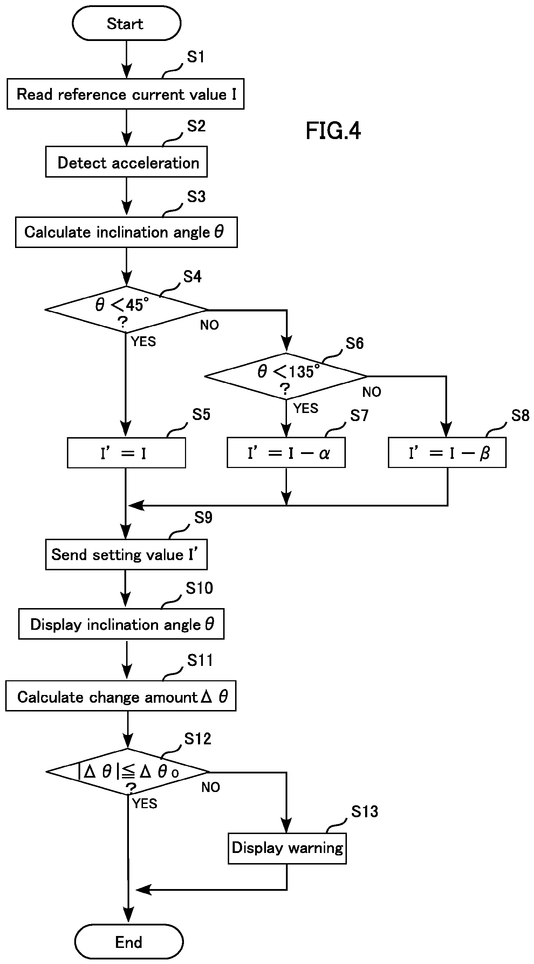

FIG. 4 is a flowchart for explaining processing for setting welding information performed by the control unit 36. This processing is repeatedly executed at predetermined time intervals while welding work is being performed (while the torch switch 331 is being pressed).

First, a welding current setting value is read as a reference current value I from the storage unit 34 (S1). Next, acceleration information is detected (S2) and a torch inclination angle $\theta$ is calculated (S3). Specifically, the control unit 36 acquires acceleration detection values of three axes detected by the acceleration sensor 351 and calculates acceleration in each axis direction of the three axes set in the welding torch 3. Then, the control unit 36 calculates the torch inclination angle $\theta$ from the calculated acceleration.

Next, a welding current setting value I' is set based on the torch inclination angle $\theta$ (S4 to S8). First, it is determined whether or not the torch inclination angle $\theta$ is less than 45° (S4). If the torch inclination angle $\theta$ is less than 45° (S4: YES), the reference current value I is set as the welding current setting value I' (S5). If the torch inclination angle $\theta$ is equal to or more than 45° (S4: NO), it is determined whether or not the torch inclination angle $\theta$ is less than 135° (S6). If the torch inclination angle $\theta$ is less than 135° (S6: YES), a value obtained by subtracting a predetermined value $\alpha$ from the reference current value I is set as the welding current setting value I' (S7). If the torch inclination angle $\theta$ is equal to or more than 135° (S6: NO), a value obtained by subtracting a predetermined value $\beta$ from the reference current value I is set as the welding current setting value I' (S8).

Next, the welding current setting value I' is sent to the welding power supply device 1 (S9). Specifically, the control unit 36 outputs the welding current setting value I' to the communication unit 31. The communication unit 31 sends the welding current setting value I' to the welding power supply device 1. The welding power supply device 1 receives and sets the welding current setting value I' and controls the output current to the welding current setting value I'. Thus, the output current from the welding power supply device 1 is controlled to be suitable for the torch inclination angle $\theta$.

Next, information regarding the torch inclination angle $\theta$ is displayed in the display 321 (S10). Specifically, the control unit 36 outputs the torch inclination angle $\theta$ to the display unit 32. The display unit 32 causes the display 321 to display information based on the input torch inclination angle $\theta$.

Next, a change amount $\Delta\theta$ of the torch inclination angle $\theta$ is calculated (S11). Specifically, the control unit 36 calculates the change amount $\Delta\theta$ by calculating a difference between the currently calculated torch inclination angle $\theta$ and the latest calculated torch inclination angle $\theta$. Then, it is determined whether or not the absolute value of the change amount $\Delta\theta$ is equal to or less than a predetermined value $\Delta\theta_0$ (S12) . If the absolute value of the change amount $\Delta\theta$ is equal to or less than the predetermined value $\Delta\theta_0$ (S12: YES), the processing ends. In contrast, if the absolute value of the change amount $\Delta\theta$ is more than the predetermined value $\Delta\theta_0$ (S12: NO), a warning is displayed (S13) and the processing ends. Specifically, the control unit 36 outputs an instruction for displaying a warning to the display unit 32. Upon receiving the instruction, the display unit 32 causes the display 321 to display a predetermined warning message.

Note that the processing illustrated by the flowchart of FIG. 4 is an example, and the processing for setting the welding information performed by the control unit 36 is not limited to that described above. For example, the processing for calculating and determining the change amount $\Delta\theta$ (S11 to S13) may be performed at a timing different from that of the processing for setting the welding information (S1 to S10) (for example, when steps S1 to S10 are performed a predetermined number of times).

The following describes functions and effects of the welding torch 3.

According to the present embodiment, the control unit 36 calculates the torch inclination angle $\theta$ based on detection values input by the acceleration sensor 351 and changes (or does not change) the welding current setting value according to the calculated torch inclination angle $\theta$. The welding current setting value is sent to the welding power supply device 1 via the communication unit 31 and is set in the welding power supply device 1. The welding power supply device 1 performs control so that the output current is the set welding current setting value. Thus, the output current from the welding power supply device 1 is controlled to be suitable for the direction of the nozzle 371. Therefore, the worker can change the current to be suitable for the direction of the nozzle 371 without operating the operation buttons 332 of the welding torch 3. Since no operations need to be performed on the operation buttons 332 of the welding torch 3, it is possible to prevent the occurrence of a weld defect due to shaking of a hand, which would otherwise be caused by operating the operation buttons 332.

Also, according to the present embodiment, information regarding the torch inclination angle $\theta$ is displayed in the display 321. Therefore, the worker can be aware of the torch inclination angle $\theta$ by viewing the display 321 and objectively recognize how much the welding torch 3 is inclined. Also, if the worker wants to increase (or reduce) the current a little more judging from the welding state and the torch inclination angle $\theta$, the worker can also change the welding current setting value manually.

Also, according to the present embodiment, the control unit 36 calculates the change amount $\Delta\theta$ of the torch inclination angle $\theta$, and if the absolute value of the change amount $\Delta\theta$ has exceeded the predetermined value $\Delta\theta_0$ (if the torch inclination angle $\theta$ has suddenly changed), causes the display unit 32 to display a warning. Therefore, the worker can comprehend from the warning that a weld defect may have occurred, and notice a weld defect.

In the present embodiment, the welding current setting value is changed based on the torch inclination angle $\theta$ calculated by the control unit 36 from the detection values detected by the acceleration sensor 351, but this should not be taken as a limitation. For example, the welding current setting value may be changed according to the acceleration detected by the acceleration sensor 351. In this case, the acceleration sensor 351 corresponds to an example of the "sensor unit", and the acceleration in each axis direction detected by the acceleration sensor 351 corresponds to an example of the "inclination information".

Although the present embodiment has been described regarding a case where the torch inclination angle $\theta$ is the angle formed by the direction of the leading end of the welding torch 3 and the vertically downward direction, this should not be taken as a limitation. The torch inclination angle $\theta$ may be an angle formed by the direction of the leading end of the welding torch 3 and the vertically upward direction. In this case, the welding current setting value is made smaller as the torch inclination angle $\theta$ becomes smaller. The torch inclination angle $\theta$ is only required to be an angle formed by a reference direction based on gravity and a direction that indicates a posture of the welding torch 3. Note that the torch inclination angle $\theta$ is preferably the angle formed by the direction of the leading end of the welding torch 3 and the vertically downward direction because the welding current setting value is changed according to the direction of the leading end of the welding torch 3 relative to the direction of gravity.

In the present embodiment, it is determined to which of the ranges "$0° \leq \theta < 45°$" (downward), "$45° \leq \theta < 135°$" (horizontal), and "$135° \leq \theta \leq 180°$" (upward) the torch inclination angle $\theta$ belongs, but this should not be taken as a limitation. For example, ranges can be appropriately set such as "$0° \leq \theta < 60°$" (downward), "$60° \leq \theta < 145°$" (horizontal),

and "145° ≤ θ ≤ 180°". Also, regions that have hysteresis characteristics (regions where the welding current setting value is changed depending on the past torch inclination angle θ) may be provided as boundary regions between the ranges. For example, if ranges are set as follows, "0° ≤ θ < 40°" (downward), "40° ≤ θ < 50°" (hysteresis region), "50° ≤ θ < 130°" (horizontal), "130° ≤ θ < 140°" (hysteresis region), and "140° ≤ θ ≤ 180°" (upward), when the torch inclination angle θ enters a hysteresis region from the downward range, the welding current setting value is kept at the reference current value, and when the torch inclination angle θ enters the horizontal range from the hysteresis region, the welding current setting value is changed from the reference current value to a value obtained by subtracting the predetermined value α from the reference current value. On the other hand, when the torch inclination angle θ enters the hysteresis region from the horizontal range, the welding current setting value is kept at the value obtained by subtracting the predetermined value α from the reference current value, and when the torch inclination angle θ enters the downward range from the hysteresis region, the welding current setting value is changed to the reference current value. Thus, the welding current setting value can be kept from being frequently switched as a result of the torch inclination angle θ frequently changing up and down over boundaries between the ranges.

In the present embodiment, the three ranges are set for determination of the torch inclination angle θ, but this should not be taken as a limitation, and it is possible to set two ranges or four or more ranges. For example, five ranges can be set as follows, "0° ≤ θ < 30°", "30° ≤ θ < 60°", "60° ≤ θ < 120°", "120° ≤ θ < 150°", and "150° ≤ θ ≤ 180°". In this case, the welding current setting value can be switched between five stages.

Also, the welding current setting value may be linearly changed according to the torch inclination angle θ. For example, the welding current setting value I' may be calculated using an expression (1) given below, where I represents the reference current value, I' represents the welding current setting value, and a represents a predetermined coefficient. In this case, provided that a = 1/9, when θ = 0 (downward), I' = I, when θ = 90 (horizontal), I' = I - 10, when θ = 180 (upward), I' = I - 20, and the welding current setting value can be linearly changed between these states.

$$I' = I - a \cdot \theta \quad . \; . \; . \quad (1)$$

Although the present embodiment has been described regarding a case where the welding current setting value is changed based on the torch inclination angle θ, this should not be taken as a limitation. A welding voltage setting value may be changed instead of the welding current setting value. In this case, the welding voltage setting value is set to decrease as the torch inclination angle θ increases. Alternatively, a current rising speed at the time of a short circuit may be changed. In this case, the rising speed is set to decrease as the torch inclination angle θ increases. Alternatively, a plurality of welding information items may be changed. Values of respective welding information items corresponding to the torch inclination angle θ may be stored in a table in the storage unit 34.

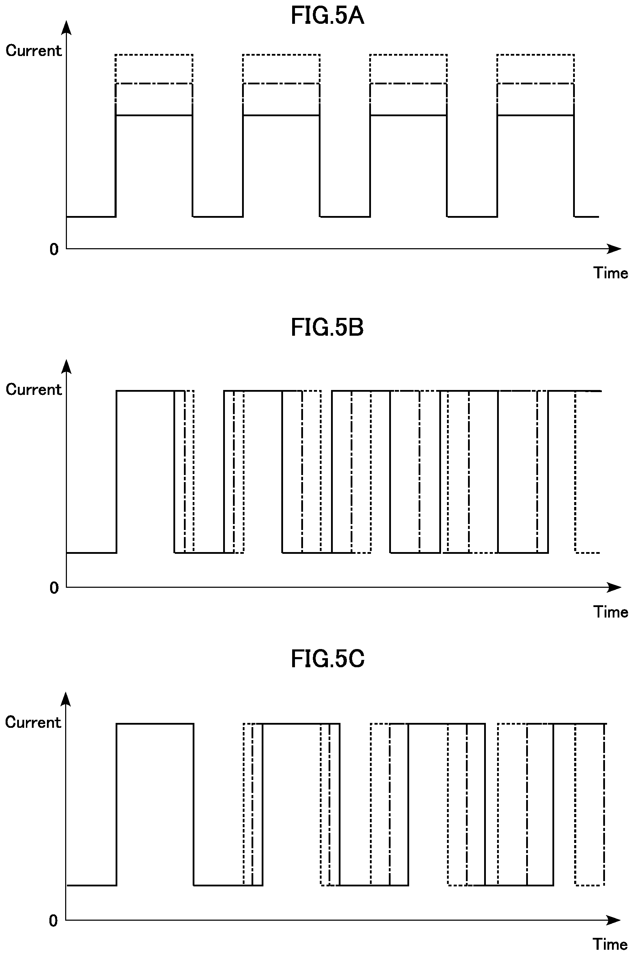

Although the present embodiment has been described regarding a case where the output from the welding power supply device 1 is a direct current output, this should not be taken as a limitation. The output from the welding power supply device 1 may be a pulsed current output. In this case, a current setting value at a high level (a peak current setting value) of pulses is set to decrease as the torch inclination angle θ increases. FIG. 5A shows output current waveforms in a case where the peak current setting value is changed according to the torch inclination angle θ. In FIG. 5A, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward) . Alternatively, a current setting value at a low level (a base current setting value) of pulses may be set to decrease as the torch inclination angle θ increases.

Alternatively, a high-level period of pulses may be set to become shorter as the torch inclination angle θ increases. FIG. 5B shows output current waveforms in a case where the high-level period is changed according to the torch inclination angle θ. In FIG. 5B, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward) . Alternatively, a low-level period of pulses may be set to become longer as the torch inclination angle θ increases. FIG. 5C shows output current waveforms in a case where the low-level period is changed according to the torch inclination angle θ. In FIG. 5C, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward).

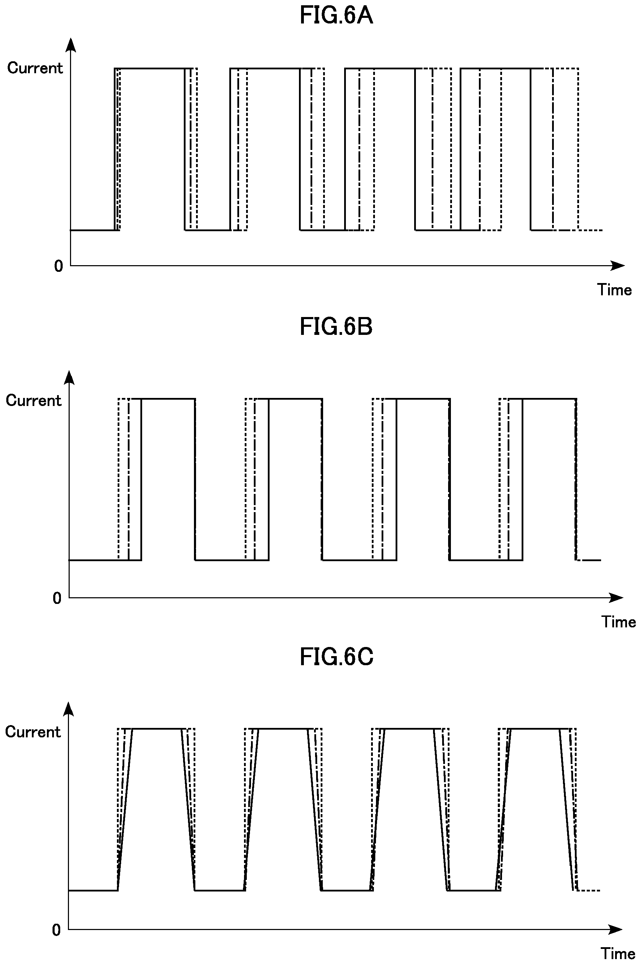

Alternatively, a pulse frequency may be set to increase as the torch inclination angle θ increases. FIG. 6A shows output current waveforms in a case where the pulse frequency is changed according to the torch inclination angle θ. In FIG. 6A, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward). Alternatively, a duty cycle of pulses may be set to decrease as the torch inclination angle θ increases. FIG. 6B shows output current waveforms in a case where the duty cycle of pulses is changed according to the torch inclination angle θ. In FIG. 6B, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward).

Alternatively, inclinations of a rise and a fall of pulses may be set to become more gentle as the torch inclination angle θ increases . FIG. 6C shows output current waveforms in a case where the inclinations of the rise and fall of pulses are changed according to the torch inclination angle θ. In FIG. 6C, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward).

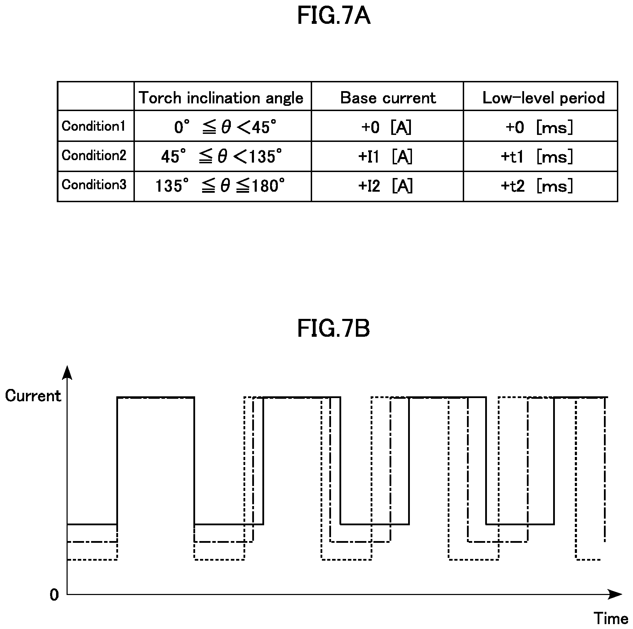

Alternatively, a plurality of welding information items may be changed. In this case, values of respective welding information items corresponding to the torch inclination angle θ are stored in a table in the storage unit 34. FIG. 7A is a diagram illustrating an example of the table. The following pieces of information are stored in the table illustrated in FIG. 7A: if the torch inclination angle θ is in the range of 0° ≤ θ < 45° (downward), the base current and the low-level period are not changed (condition 1); if the torch inclination angle θ is in the range of 45° ≤ θ < 135° (horizontal), a predetermined value I1 [A] is added to the base current and a predetermined value t1 [ms] is added to the low-level period (condition 2); and if the torch inclination angle θ is in the range of 135° ≤ θ ≤ 180° (upward), a predetermined value I2 [A] is added to the base current and a predetermined value t2 [ms] is added to the low-level period (condition 3). FIG. 7B shows output current waveforms in a case where the base current setting value and the low-level period are changed according to the torch inclination angle θ and the table illustrated in FIG. 7A. In FIG. 7B, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward) . As the torch inclination angle θ increases, the difference between the base current and the peak current is reduced and the low-level period is made longer to reduce the amount of electric power to be supplied.

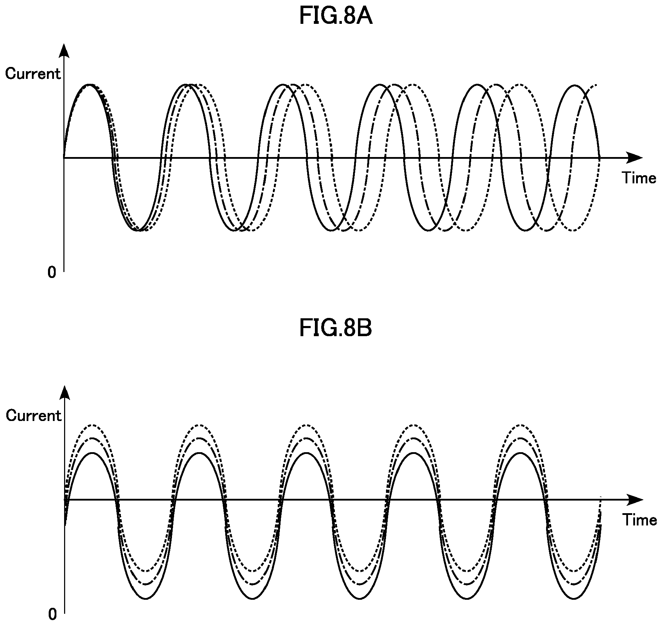

The output from the welding power supply device 1 may be an alternating current output. In this case, an alternating current frequency is set to increase as the torch inclination angle θ increases. FIG. 8A shows output current waveforms in a case where the alternating current frequency is changed according to the torch inclination angle θ. In FIG. 8A, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward).

Alternatively, a ratio of a period during which the welding torch 3 is made positive may be set to decrease as the torch inclination angle θ increases . When the welding power supply device 1 outputs an alternating current, a state where the current flows with the welding torch 3 made positive and the workpiece W made negative and a state where the current flows with the welding torch 3 made negative and the workpiece W made positive are alternately repeated. Out of these states, a ratio of a period during which the welding torch 3 is made positive is adjusted. Specifically, an offset value x is adjusted in an expression (2) given below, which represents a control target Iref of the alternating current output from the welding power supply device 1. Note that A represents amplitude, ω represents angular frequency, and φ represents initial phase. As the offset value x decreases, the current waveform shifts toward the negative side, the ratio of the period during which the welding torch 3 is made positive decreases, and a ratio of a period during which the workpiece W is made positive increases. As the ratio of the period during which the welding torch 3 is made positive decreases, the wire electrode becomes more unlikely to melt. Conversely, as the offset value x increases, the current waveform shifts toward the positive side, the ratio of the period during which the welding torch 3 is made positive increases, and the ratio of the period during which the workpiece W is made positive decreases. As the ratio of the period during which the welding torch 3 is made positive increases, the wire electrode becomes more likely to melt.

$$\mathtt{Iref = A \cdot sin(\omega t + \varphi) + x \ . \ . \ . \ (2)}$$

FIG. 8B shows output current waveforms in a case where the period during which the welding torch 3 is made positive is changed according to the torch inclination angle θ. In FIG. 8B, the dashed line shows a waveform when the torch inclination angle θ is 0° ≤ θ < 45° (downward), the dash-dot line shows a waveform when the torch inclination angle θ is 45° ≤ θ < 135° (horizontal), and the solid line shows a waveform when the torch inclination angle θ is 135° ≤ θ ≤ 180° (upward).

Note that the above-described parameters are examples of parameters of welding information. Parameters of welding information that are changed according to the torch inclination angle θ are not limited to those described above.

Although the present embodiment has been described regarding a case where the welding power supply device 1 and the wire feeding device 2 communicate with each other via the signal line 8, this should not be taken as a limitation. For example, communication may be performed by superimposing signals on the power cables 41 and 42 or the electric power transmission line 5. In this case, the signal line 8 connecting the welding power supply device 1 and the wire feeding device 2 to each other is not required.

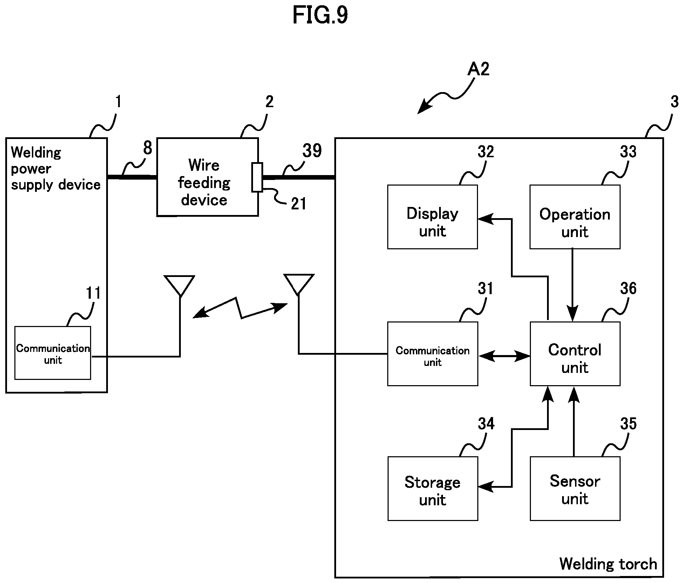

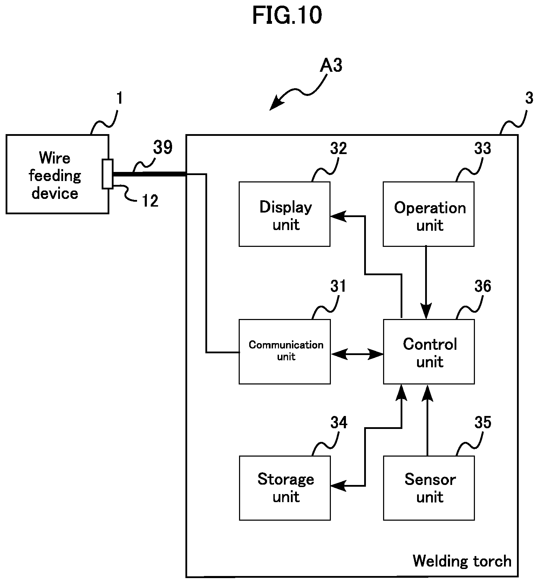

FIGS. 9 and 10 illustrate other embodiments of the present disclosure. Note that, in these drawings, elements that are the same as or similar to those in the above-described first embodiment are denoted with the same reference signs as those used in the first embodiment.

FIG. 9 is a block diagram illustrating a functional configuration of a welding system A2 according to a second embodiment.

The welding system A2 illustrated in FIG. 9 differs from the welding system A1 according to the first embodiment in that the welding torch 3 wirelessly communicates with the welding power supply device 1.

The communication unit 31 sends and receives a signal via an antenna. The communication unit 31 modulates a signal input from the control unit 36 and sends the modulated signal as an electromagnetic wave. Also, the communication unit 31 demodulates an electromagnetic wave received by the antenna and outputs the demodulated electromagnetic wave to the control unit 36. The communication unit 31 wirelessly communicates with a communication unit 11 of the welding power supply device 1.

Effects similar to those achieved in the first embodiment can also be achieved in the second embodiment.

FIG. 10 is a block diagram illustrating a functional configuration of a welding system A3 according to a third embodiment.

The welding system A3 illustrated in FIG. 10 differs from the welding system A1 according to the first embodiment in that the welding system A3 does not include the wire feeding device 2. The welding system A3 is a non-consumable electrode welding system in which a wire electrode is not used.

The welding power supply device 1 and the welding torch 3 are connected to each other by the torch cable 39. The welding power supply device 1 includes a connector 12 that is, for example, a recessed connection terminal. The welding torch 3 and the welding power supply device 1 are connected to each other by inserting a protruding torch plug (not illustrated) provided at one end of the torch cable 39 of the welding torch 3 into the connector 12. The power cable 41, the gas pipe 7, the electric power transmission line 5, and the signal line 8 inside the welding power supply device 1 are respectively connected to the power cable 41, the gas pipe 7, the electric power transmission line, and the signal line inside the torch cable 39 via this connector 12.

Effects similar to those achieved in the first embodiment can also be achieved in the third embodiment.

The welding torch and the welding system according to the present disclosure are not limited to the above-described embodiments. Various design modifications can be freely made to the specific configuration of each unit of the welding torch and the welding system according to the present disclosure.

The above-described embodiments encompass configurations according to the following appendixes.

[Appendix 1]

A welding torch that performs arc welding when electric power is supplied from a welding power supply device, the welding torch comprising:

a sensor unit that detects inclination information regarding the welding torch;
a welding information acquiring unit that acquires welding information suitable for the inclination information detected by the sensor unit; and
a communication unit that sends the welding information acquired by the welding information acquiring unit to the welding power supply device.

[Appendix 2]

The welding torch according to appendix 1,
wherein the sensor unit detects an angle formed by a direction of a leading end of the welding torch and a vertically downward direction as the inclination information.

[Appendix 3]

The welding torch according to appendix 1 or 2,
wherein the welding information acquiring unit determines to which range of a plurality of ranges the inclination information belongs, and acquires the welding information based on a value associated with the determined range.

[Appendix 4]

The welding torch according to appendix 3,
wherein the number of the plurality of ranges is three.

[Appendix 5]

The welding torch according to appendix 3 or 4,
wherein a region that has hysteresis characteristics is provided as a boundary region between ranges of the plurality of ranges.

[Appendix 6]

The welding torch according to appendix 1 or 2,
wherein the welding information acquiring unit acquires the welding information based on a value that linearly changes according to the inclination information.

[Appendix 7]

The welding torch according to any one of appendixes 1 to 6,
wherein the welding information is a welding current setting value.

[Appendix 8]

The welding torch according to any one of appendixes 1 to 6,
wherein the welding power supply device outputs a pulsed current, and
the welding information includes any of:

a base current setting value of pulses;
a peak current setting value of pulses;
a low-level period of pulses;
a high-level period of pulses;
a frequency of pulses;
a duty cycle of pulses; and
an inclination of a rise or a fall of pulses.

[Appendix 9]

The welding torch according to any one of appendixes 1 to 6,
wherein the welding power supply device outputs an alternating current, and
the welding information includes:

an alternating current frequency; or
a ratio of a period during which the welding torch is made positive.

[Appendix 10]

The welding torch according to any one of appendixes 1 to 9, further comprising:
a display unit that performs display regarding the inclination information.

[Appendix 11]

The welding torch according to any one of appendixes 1 to 10, further comprising:

a change amount calculating unit that calculates a change amount of the inclination information; and
a notification unit that issues a warning when a change amount calculated by the change amount calculating unit exceeds a predetermined value.

[Appendix 12]

The welding torch according to any one of appendixes 1 to 11,
wherein the sensor unit includes an acceleration sensor.

[Appendix 13]

A welding system comprising:

a welding torch set forth in any one of appendixes 1 to 12; and
the welding power supply device.

**Claims**

1. A welding torch that performs arc welding when electric power is supplied from a welding power supply device, the welding torch comprising:

a sensor unit that detects inclination information regarding the welding torch;
a welding information acquiring unit that acquires welding information suitable for the inclination information detected by the sensor unit; and
a communication unit that sends the welding information acquired by the welding information acquiring unit to the welding power supply device.

2. The welding torch according to claim 1, wherein the sensor unit detects an angle formed by a direction of a leading end of the welding torch and a vertically downward direction as the inclination information.

3. The welding torch according to claim 1 or 2, wherein the welding information acquiring unit determines to which range of a plurality of ranges the inclination information belongs, and acquires the welding information based on a value associated with the determined range.

4. The welding torch according to claim 3, wherein the number of the plurality of ranges is three.

5. The welding torch according to claim 3 or 4, wherein a region that has hysteresis characteristics is provided as a boundary region between ranges of the plurality of ranges.

6. The welding torch according to claim 1 or 2, wherein the welding information acquiring unit acquires the welding information based on a value that linearly changes according to the inclination information.

7. The welding torch according to any one of claims 1 to 6, wherein the welding information is a welding current setting value.

8. The welding torch according to any one of claims 1 to 6, wherein the welding power supply device outputs a pulsed current, and
the welding information includes any of:

a base current setting value of pulses;
a peak current setting value of pulses;
a low-level period of pulses;
a high-level period of pulses;
a frequency of pulses;
a duty cycle of pulses; and
an inclination of a rise or a fall of pulses.

9. The welding torch according to any one of claims 1 to 6, wherein the welding power supply device outputs an alternating current, and
the welding information includes:

an alternating current frequency; or
a ratio of a period during which the welding torch is made positive.

10. The welding torch according to any one of claims 1 to 9, further comprising a display unit that performs display regarding the inclination information.

11. The welding torch according to any one of claims 1 to 10, further comprising:

a change amount calculating unit that calculates a change amount of the inclination information; and
a notification unit that issues a warning when a change amount calculated by the change amount calculating unit exceeds a predetermined value.

12. The welding torch according to any one of claims 1 to 11, wherein the sensor unit includes an acceleration sensor.

13. A welding system comprising:

a welding torch set forth in any one of claims 1 to 12; and
the welding power supply device.

EP 3 539 708 A1

FIG.1A

P

1

A1

6

7

7

7

8

5

2

39(41,7)

3

W

41

42

FIG.1B

A1

1

Welding
power
supply device

8

2

Wire
feeding
device

21

39

3

32

Display
unit

33

Operation
unit

31

Communication
unit

36

Control
unit

34

Storage
unit

35

Sensor
unit

Welding torch

15

FIG.2A

371

3

37

381

321

332

351

331

38

39

FIG.2B

371

3

37

381

321

332a
332d
332b
332c
332

351

38

39

**FIG.3**

180°

135°

Upward
(Reference current value $-\beta$ )

180°

90°

Horizontal
(Reference current value $-\alpha$ )

3b

3c

3a

45°

0°

Downward
(Reference current value)

0°

FIG.4

Start

S1
Read reference current value I

S2
Detect acceleration

S3
Calculate inclination angle $\theta$

S4
$\theta < 45°$ ?
YES / NO

S6
$\theta < 135°$ ?
YES / NO

S5
$I' = I$

S7
$I' = I - \alpha$

S8
$I' = I - \beta$

S9
Send setting value $I'$

S10
Display inclination angle $\theta$

S11
Calculate change amount $\Delta \theta$

S12
$|\Delta \theta| \leqq \Delta \theta_0$ ?
YES / NO

S13
Display warning

End

18

## FIG.5A

## FIG.5B

## FIG.5C

# FIG.6A

# FIG.6B

# FIG.6C

## FIG.7A

|  | Torch inclination angle | Base current | Low-level period |
|---|---|---|---|
| Condition1 | $0° \leqq \theta < 45°$ | +0 [A] | +0 [ms] |
| Condition2 | $45° \leqq \theta < 135°$ | +I1 [A] | +t1 [ms] |
| Condition3 | $135° \leqq \theta \leqq 180°$ | +I2 [A] | +t2 [ms] |

## FIG.7B

## FIG.8A

## FIG.8B

# FIG.9

A2

Welding power supply device 1

Wire feeding device 2

8

39

21

Communication unit 11

A2 3

Display unit 32

Operation unit 33

Communication unit 31

Control unit 36

Storage unit 34

Sensor unit 35

Welding torch

## FIG.10

A3

1

Wire feeding device

39

12

3

32

Display unit

33

Operation unit

31

Communication unit

36

Control unit

34

Storage unit

35

Sensor unit

Welding torch

## INTERNATIONAL SEARCH REPORT

| International application No. |
| --- |
| PCT/JP2017/036487 |

A. CLASSIFICATION OF SUBJECT MATTER
Int.Cl. B23K9/095(2006.01)i, B23K9/10(2006.01)i, B23K9/29(2006.01)i

According to International Patent Classification (IPC) or to both national classification and IPC

B. FIELDS SEARCHED

Minimum documentation searched (classification system followed by classification symbols)
Int.Cl. B23K9/095, B23K9/10, B23K9/29

Documentation searched other than minimum documentation to the extent that such documents are included in the fields searched
Published examined utility model applications of Japan    1922-1996
Published unexamined utility model applications of Japan    1971-2017
Registered utility model specifications of Japan    1996-2017
Published registered utility model applications of Japan    1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | US 2011/0220619 A1 (ILLINOIS TOOL WORKS INC.) 15 September 2011, paragraphs [0014]-[0044], fig. 1-6 & WO 2011/112628 A1 & CN 102791414 A | 1-13 |
| Y | JP 2009-500178 A (FRONIUS INTERNATIONAL GMBH) 08 January 2009, paragraphs [0050]-[0073], fig. 3, 4 & US 2008/0314887 A1, paragraphs [0059]-[0082], fig. 3, 4 & WO 2007/009131 A1 & CN 101218060 A | 1-13 |

☒   Further documents are listed in the continuation of Box C.     ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 December 2017 | 26 December 2017 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2017/036487 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2015-535200 A (ILLINOIS TOOL WORKS INC.) 10 December 2015, paragraph [0019], fig. 5 & US 2014/0069899 A1, paragraph [0025], fig. 5 & WO 2014/039584 A1 & CN 104602850 A & KR 10-2015-0052229 A | 10-13 |

Form PCT/ISA/210 (continuation of second sheet) (January 2015)